(19) **Europäisches Patentamt / European Patent Office / Office européen des brevets**

(11) **EP 4 343 684 A1**

(12) **EUROPEAN PATENT APPLICATION**
published in accordance with Art. 153(4) EPC

(43) Date of publication:
**27.03.2024 Bulletin 2024/13**

(21) Application number: **23735124.2**

(22) Date of filing: **21.02.2023**

(51) International Patent Classification (IPC):
**G06T 5/40** (2006.01)   **G06F 17/18** (2006.01)
**G06F 15/00** (2006.01)   **G06F 7/38** (2006.01)

(52) Cooperative Patent Classification (CPC):
**G06F 7/38; G06F 15/00; G06F 17/18; G06T 5/40**

(86) International application number:
**PCT/CN2023/077483**

(87) International publication number:
**WO 2023/126019 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.06.2022  CN 202210730547
29.09.2022  CN 202211201288

(71) Applicant: **Calterah Semiconductor Technology (Shanghai) Co., Ltd**
**Shanghai 201210 (CN)**

(72) Inventors:
• **TANG, Ran**
**Shanghai 201210 (CN)**
• **YE, Jingcheng**
**Shanghai 201210 (CN)**
• **ZHU, Yan**
**Shanghai 201210 (CN)**

(74) Representative: **Arnold & Siedsma**
**Bezuidenhoutseweg 57**
**2594 AC The Hague (NL)**

(54) **DATA PROCESSING METHOD AND APPARATUS, AND RADAR SENSOR**

(57) The disclosure provides a data processing method, which can be applied to calculating a histogram of a preset data sequence. Each piece of data in the preset data sequence comprises an exponential part and a mantissa part. The method comprises: performing normalization processing on the preset data sequence to obtain a first index and a first mantissa of each data; according to the first index and the first mantissa of each data, generating a register address; and according to the register address, adjusting a numerical value in the corresponding register. The data processing method provided by the disclosure can be used in the process of statistical sorting of fixed point non-negative real number data such as ADC sampling data, floating point non-negative real number data such as two-dimensional FFT power data, and other types of data. The statistical classification carried out by the method is high in speed and low in operation complexity, and the data processing efficiency is improved.

Data processing method <u>10</u>

| Normalize the preset data sequence to obtain a first exponent and a first mantissa of each data | S101 |

| Generate a register address according to the first exponent and the first mantissa of each data | S102 |

| Adjust a value in a corresponding register according to the register address | S103 |

FIG. 1

EP 4 343 684 A1

**Description**

This application claims the priority of Chinese Patent Application No. 202210730547.1, filed to the CNIPA on June 24th, 2022, and entitled "Data Processing Method, Hardware Accelerator, Electronic Device and Storage Media", and also claims the priority of Chinese Patent Application No. 202211201288.X, filed to the CNIPA on September 29, 2022, and entitled "Data Processing Method, Apparatus and Radar Sensor", the contents of which should be understood as being incorporated into this disclosure by reference.

Technical field

The embodiment of the present disclosure relates to, but is not limited to, the field of data processing, in particular to a data processing method, an apparatus and a radar sensor.

Background

In the processing of data of types such as radar data, it is often needed to sort some data, and the time complexity of simple sorting is $O(N^2)$, while the time complexity of fast sorting is $O(Nlgo(N))$, and N is the number of data. It can be seen that with the increase of sorted data, the time complexity of both simple sorting and fast sorting will increase geometrically, and then for application scenarios that need massive data sorting such as radar data, the data sorting will consume more processing and time resources of the system.

Summary

The following is a summary of the subject described in detail herein. This summary is not intended to limit the scope of protection of the claims.

The embodiment of the present disclosure provides a data processing method, which can be applied to the statistical sorting process for fixed-point non-negative real data such as ADC sampling data, floating-point non-negative real data such as two-dimensional FFT power data, and other types of data. The classification statistics performed by the method is fast in speed and low in computational complexity and the data processing efficiency is improved. The method is easy to be implemented in hardware, and provides hardware support for operations such as noise floor estimation, interference detection, and constant false alarm processing or side track detection by utilizing the various data described above subsequently.

The embodiment of the present disclosure provides a data processing method, applied to Histogram Statistics on a preset data sequence, each data in the preset data sequence includes an exponent part and a mantissa part, the method can includes: normalizing the preset data sequence to obtain a first exponent and a first mantissa of each data; generating a register address according to the first exponent and the first mantissa of each data; and adjusting a value in a corresponding register according to the register address.

The above data processing method, through the histogram statistics of the preset data sequence, can quickly implement the statistics and sorting of data in the processing of data of types such as radar data, especially for the statistics and sorting operation of fixed-point or floating-point non-negative real data, which can reduce the time complexity of simple sorting from $O(N^2)$ or $O(Nlog(N))$ to $O(N)$. For example, when sorting sampling data in radar data, velocity dimension data and energy dimension data after two-dimensional FFT processing, etc., the time complexity of simple sorting or fast sorting will not increase geometrically with the increase of sorting data, and further, for application scenarios that need massive data sorting such as radar data, it can ensure that data sorting will not consume more processing resources and time resources of the system, so as to ensure real-time processing output.

In some alternative embodiments, wherein normalizing the preset data sequence to obtain a first exponent and a first mantissa of each data includes: shifting the mantissa part of any current data until the first bit of the mantissa part is "1", and taking the mantissa part after being shifted as the first mantissa of the current data; performing a subtraction processing on an exponent part of the current data which the first mantissa is obtained so that its data value remains unchanged, and using the processed exponent part as the first exponent of the current data.

In some alternative embodiments, wherein the register address has a preset number of bits, the method includes: searching in the preset data sequence after being normalized to obtain a maximum value and a minimum value of the first exponent; determining a first number of bits in the register address configured to store exponent information according to the maximum value and the minimum value of the first exponent; determining a second number of bits in the register address configured to store mantissa information according to the first number of bits in the register address configured to store the exponent information and the preset number of bits in the register address.

In some alternative embodiments, wherein generating a register address according to the first exponent and the first mantissa of the data includes: obtaining a first exponent serial number based on the first exponent, the first exponent serial number has the first number of bits configured to store the exponent information; obtaining a first mantissa serial number based on a preset one or more significant bits of the first mantissa, the first mantissa serial number has the second number of bits configured to store the mantissa information; combining the first exponent serial number with the first mantissa serial number to generate the register address.

In some alternative embodiments, wherein the first exponent serial number is obtained based on the first exponent of the data and the minimum value of the first exponent in the preset data sequence.

In some alternative embodiments, wherein adjusting the value in the corresponding register according to the register address includes: adding 1 to the value in the corresponding register according to the register address.

In some alternative embodiments, the method may further include: after counting all the data in the preset data sequence, generating a statistical histogram with the register address as the abscissa and the value stored in the register as the ordinate.

In some alternative embodiments, the method may further include locking a preset bin in the statistical histogram, and restoring the register address in the preset bin to the data in the preset data sequence by an inverse transformation algorithm.

In some alternative embodiments, the data in the preset data sequence is fixed-point non-negative real data or floating-point non-negative real data.

In some alternative embodiments, the preset data sequence is a data sequence of radar data.

In some alternative embodiments, wherein the radar data includes one or more of sampled data obtained after sampling an echo signal, two-dimensional FFT velocity dimension data obtained after fast Fourier transform of the sampled data, and energy dimension data obtained by processing the sampled data.

The embodiment of the present disclosure further provides a data processing apparatus, which can be applied to performing histogram statistics on a preset data sequence, wherein each data in the preset data sequence includes an exponent part and a mantissa part, the apparatus includes: a data processing unit configured to normalize the preset data sequence to obtain a first exponent and a first mantissa of each data; an address generation unit coupled to the data processing unit and configured to generate a register address based on the first exponent and the first mantissa of each data; a counting unit coupled to the address generation unit and configured to adjust a value in a corresponding register according to the register address.

In some alternative embodiments, the apparatus may further include a histogram generation unit coupled with the counting unit and configured to read a register address and a value stored in the register after all data in the preset data sequence are counted, and generate a statistical histogram with the register address as an abscissa and the value in the register as an ordinate.

The embodiment of the present disclosure further provides a radar sensor, which may include a transmitting unit configured to transmit a continuous wave with a frequency that linearly varies with time; a receiving unit configured to receive an echo signal; a mixing unit coupled with the transmitting unit and the receiving unit respectively and configured to perform frequency reduction processing on the echo signal to obtain an intermediate frequency signal; a sampling unit coupled with the mixing unit and configured to sample the intermediate frequency signal after being analog-to-digital converted to output the sampled data; a FFT unit coupled with the sampling unit and configured to perform two-dimensional fast Fourier transform on the sampled data and output one-dimensional Fourier transform data and two-dimensional Fourier transform data respectively; any apparatus configured to be capable of data processing as described above, coupled to the sampling unit and the FFT unit, respectively, configured to: perform statistics on one or more of the sampled data, two-dimensional FFT velocity dimension data obtained after fast Fourier transform on the sampled data, and energy dimension data obtained by processing the sampled data; read a register address and a value stored in the register after statistics on all data is completed, and generate a statistical histogram with the register address as an abscissa and the value in the register as an ordinate.

In some alternative embodiments, the radar sensor may include an interference determination unit coupled to the apparatus configured for data processing and configured to: perform one or more of interference detection, constant false alarm processing and side track detection on the intermediate frequency signal according to the statistical histogram.

In some alternative embodiments, the radar sensor may include a target detection unit coupled to the FFT unit and the interference determination unit, respectively, and configured to: obtain the range and velocity of a target object in the one-dimensional FFT data and/or the two-dimensional FFT data according to an interference detection threshold after the constant false alarm processing when the interference determination unit determines that an interference signal is not included in the intermediate frequency signal.

The embodiment of the present disclosure further provides an integrated circuit, which can include a radio frequency module, an analog signal processing module, and a digital signal processing module sequentially connected; the radio frequency module is configured to generate a radio frequency transmitting signal and receive a radio frequency receiving signal; the analog signal processing module is configured to perform frequency reduction processing on the radio frequency receiving signal to obtain an intermediate frequency signal; the digital signal processing module is configured to perform analog-to-digital conversion on the intermediate frequency signal to obtain a digital signal; and a data processing module configured to process the digital signal to achieve target detection; wherein, the data processing module further includes a histogram hardware accelerator configured to implement the method described in the embodiment of the present disclosure and to implement at least one signal processing procedure such as noise floor estimation, interference detection, Ordered Statistic Constant False Alarm Rate (OS-CFAR), and side track detection based on the method .

In some alternative embodiments, the integrated circuit may be a millimeter wave radar chip.

The embodiment of the present disclosure further provides a radio device, which may include a carrier; the integrated circuit as described in any one of the embodiments of the present disclosure, which is provided on the carrier; an antenna, the antenna is provided on the carrier, or the antenna is integrated with the integrated circuit as an integral device provided on the carrier; wherein the integrated circuit is connected to the antenna and may be configured to transmit the radio frequency transmitting signal and/or receive the radio frequency receiving signal.

The embodiment of the invention further provides a terminal device, which can include a device body; and a radio device as described in the embodiment of the present disclosure provided on the device body; wherein the radio device may be configured to perform target detection to provide reference information for operation of the device body.

The data processing method provided by the present disclosure can be applied to statistically classifying a variety of data (e.g., radar data) such as ADC sampling data, two-dimensional FFT power data obtained after fast Fourier transform of the sampling data, fixed-point or floating-point non-negative real data generated in other processing procedure. The classification statistics performed by the method is fast in speed and low in computational complexity, and data processing efficiency is improved. The apparatus provided by the present disclosure, which can be configured to perform data processing, is easy to be implemented in hardware, and provides hardware support for noise floor estimation, interference detection, constant false alarm processing or side track detection by using the above-mentioned various radar data subsequently. The radar sensor provided by the present disclosure can be integrated with the histogram hardware accelerator described in any of the embodiments of the present disclosure, so as to achieve operations such as noise floor estimation, interference detection, OS-CFAR and side track detection based on energy or velocity dimensions in the radar data process on the basis of the physical architecture of the same hardware accelerator, which not only simplifies the operation process, but also saves the computing power, improves the reuse rate of the hardware structure and improves the integration level of devices. In addition, the physical architecture with the hardware accelerator can effectively increase the speed of processing radar data.

Brief Description of Drawings

In order to more clearly illustrate the technical solutions in the embodiments of the present disclosure, the following is a brief description of the accompanying drawings that need to be used in the description of the embodiments. It will be apparent that the accompanying drawings in the following description are only some embodiments of the present disclosure, for those of ordinary skill in the art, other accompanying drawings may be obtained from these accompanying drawings, without departing the scope of protection claimed in the present disclosure.

FIG. 1 illustrates a statistical method of radar data provided by an embodiment of the present disclosure;
FIG. 2 illustrates register addresses and stored values corresponding to a statistical method of radar data provided by an embodiment of the present disclosure;
FIG. 3 illustrates a statistical histogram formed in a statistical method of radar data provided by an embodiment of the present disclosure;
FIG. 4 illustrates data types and storage formats in an embodiment of the present disclosure;
FIG. 5 illustrates bits number information and storage format in a register address provided in an embodiment of the present disclosure;
FIG. 6 illustrates register addresses and stored values corresponding to a statistical method of radar data provided by an embodiment of the present disclosure;
FIG. 7 illustrates an apparatus provided by an embodiment of the present disclosure that may be configured to perform radar data statistics;
FIG. 8 illustrates a radar sensor provided by an embodiment of the present disclosure;
FIGS. 9a to 9g are schematic diagrams relating to performing Ordered Statistic-Constant False Alarm Rate (OS-CFAR) based on hardware accelerators of embodiments of the present disclosure.

Detailed Description

The technical solutions in the embodiments of the present disclosure will be clearly and completely described below in conjunction with the accompanying drawings in the embodiments of the present disclosure, and it is clear that the embodiments described are a part of the embodiments of the present disclosure, and not all of them. All other embodiments obtained by those skilled in the art based on the embodiments in the present disclosure without making creative efforts fall within the scope of protection of the present disclosure.

The following is a detailed description by taking a millimeter wave radar as an example.

A millimeter wave radar is a detection radar working in millimeter wave band. Generally, millimeter wave refers to electromagnetic wave signals in the frequency domain from 30GHz to 300GHz (corresponding wavelengths from 1mm to 10mm). The wavelength of millimeter wave is between microwave and centimeter wave, so the radar sensor has some advantages of both microwave radar and photoelectric radar. For example, the radar sensor is small in size, light in weight, high in spatial resolution, strong in penetrating fog, smoke and dust, and has all-weather detection performance. The radar sensor can distinguish and identify very small targets, and can identify a plurality of targets at the same time.

Linear Frequency Modulated Continuous Wave (LFMCW) is widely used in automotive radar sensor systems. In this radar system, a transmitter continuously transmits a plurality of LFMCW pulse waveforms, and a receiver downconverts the received LFMCW reflected signals to obtain baseband signals, and then performs 2Dimension (2D) Fast Fourier Transform (FFT). Herein, the first dimension is the FFT in each LFMCW pulse, that is, the range dimension FFT; the second dimension is to take out the value at the same spectral line position within the FFT spectrum of all pulses and perform another FFT operation, i.e., Doppler-dimensional FFT. In this 2D FFT plane thus obtained, targets with different ranges and velocities are presented in the form of peaks at different coordinates of the 2D FFT plane. The stronger the reflection of the target, the higher the peak value will be. In the process of target detection, that is, in the process of searching for a peak in the 2D FFT plane, when the value at a certain coordinate of the 2D FFT is higher than a certain detection threshold, such as the noise floor of the 2D FFT plane, and some specific conditions are met, it can be considered as a target, and the coordinate values of the range dimension and Doppler dimension corresponding to this coordinate correspond to the range and velocity of the target respectively.

How to use the radar raw data of radar sensor and 2DFFT data obtained by two-dimensional Fourier transform to quickly determine the target object and measure the range and velocity, and at the same time, perform a series of work such as interference detection and constant false alarm processing is a problem faced by radar data processing.

By taking LFMCW radar sensor as an example, this disclosure briefly describes the process and principle of radar data generation.

The LFMCW radar sensor generates, through a signal generator, a digital signal with a frequency that varies linearly with time, a digital-to-analog converter is coupled to the signal generator and configured to receive the digital signal and convert it into an analog signal, and an oscillator is coupled to the digital-to-analog converter and configured to receive the analog signal and generate a millimeter wave band radio frequency signal according to the analog signal. A separator is coupled to the oscillator and is configured to separate the radio frequency signal generated by the oscillator, and one part is used as a transmission signal to be transmitted from the transmission antenna toward the detection space where a target object may exist, and the other part is used as an input signal to a mixer to generate a mixed signal.

The receiving antenna of the LFMCW radar sensor is configured to receive millimeter wave signals in the detection space, which include echoes formed by reflection of the transmission signal by a target object in the detection space, and may also include interference signals, such as from other on-board radar sensors. The mixer is coupled to the receiving antenna and configured to mix the millimeter wave signal received by the receiving antenna with the transmission signal, wherein the mixer includes a low-pass filter, and after the transmission signal and the receiving signal are multiplied in the time domain, the result is low-pass filtered through the low-pass filter to form a mixed signal (i.e., raw data of the radar sensor). An analog-to-digital converter is coupled to the low-pass filter and configured to sample the mixed signal and output it to a signal processing unit.

The signal processing unit is coupled to the analog-to-digital converter and configured to receive the sampled mixed signal and perform a two-dimensional fast Fourier transform (FFT) on the sampled mixed signal. A fast Fourier transform is performed on the sampled signal in the time domain, and the resulting frequency value (beat frequency) is related to the range of the target object. After the one-dimensional Fourier transform, the velocity information of the target object remains in the phase information of the mixed signal. The one-dimensional FFT data of the same range resolution (range gate) is sampled again, and the sampled FFT data is subjected to fast Fourier transform, and the obtained frequency value (Doppler frequency) is related to the velocity of the target object.

In the processing of the mixed signal above, there are three data outputs: the analog-to-digital converter (ADC) samples the mixed signal and outputs ADC sampled data; the signal processing unit performs fast Fourier transform on the sampled signal in time domain to obtain one-dimensional FFT data and output it; the signal processing unit then samples the one-dimensional FFT data of the same range resolution (range gate) again, performs fast Fourier transform on the sampled FFT data to obtain two-dimensional FFT data and output it.

The present disclosure provides a statistical method for one or more of the above ADC sampled data, one-dimensional FFT data and two-dimensional FFT data. The statistical method is fast, simple and easy for hardware implementation, and provides hardware support for noise floor estimation, interference detection, constant false alarm processing or side track detection by utilizing one or more of the above ADC sampled data, one-dimensional FFT data and two-dimensional FFT data subsequently.

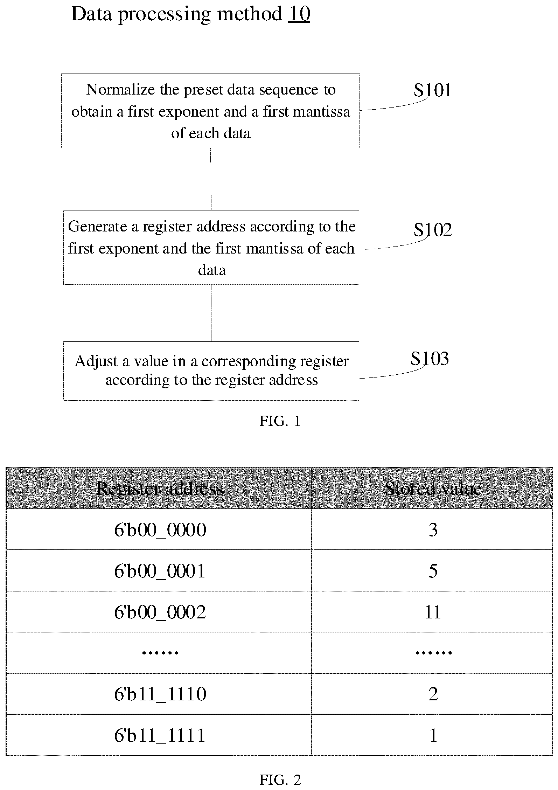

According to an embodiment of the present disclosure, as shown in FIG. 1, the present disclosure provides a statistical method 10 of radar data, wherein the radar data includes a preset data sequence, and the data in the preset data sequence includes an exponent part and a mantissa part. The statistical method 10 of radar data includes acts S101 to S103.

In act S101, the preset data sequence is normalized to obtain a first exponent and a first mantissa of data. ADC sampling data, and two-dimensional FFT power data are usually data sequences of known length, the data representation method in different data sequences varies depending on the data type and storage format, for example including:

1. $(-1)^s * (1. M) * 2^{E-offset}$, IEEE 754 Floating Point Representation Rule, with individual sign bit s in the data, offset = 127.
2. $M * 2^{-E}$
3. $M * 2^E$
4. M, excluding exponential part E.

In this disclosure, M and 1.M are referred to as mantissa parts, and E and E-offset are referred to as exponential parts.

Because the data statistic objects to which the present disclosure relates, such as ADC sampling data, one-dimensional FFT data, two-dimensional FFT data (including energy data), velocity data, etc., involve only positive numbers, therefore the sign bits of IEEE 754 floating-point numbers are not taken into account, each data may be expressed as:

$$M * 2^{E_{val}}, \text{ herein, } E_{val} = (-1)^{se} * (E - offset)$$

Herein, se and offset can be configured as required to represent the first, second, third and fourth data types and storage formats mentioned above. For example, let se=1 and offset=0, it can represent the second data type; let se=0, E=0 and offset=0, it can represent the fourth data type.

Optionally, when histogram statistics is performed for velocity dimension data, statistical processing can be performed directly, while when histogram statistics is performed for energy dimension data, logarithmic processing can be performed for energy dimension data of samples first (such as log operation with a base of 2 or 10, and log operation with a base of 2 can be selected, in consideration of the mutual fit with computer data storage characteristics, thus achieving the purpose of reducing the implementation difficulty). In addition, histogram statistics based on energy dimension data may be applied in scenarios such as noise floor estimation, interference detection, constant false alarm processing (e.g. OS-CFAR) or side track detection.

According to an embodiment of the present disclosure, in the act S101 above, normalizing the data sequence to obtain the first exponent and the first mantissa of the data includes acts S1011 and S1012.

In act S 1011, the mantissa part of the data is shifted until the first bit of the mantissa part is 1, and the mantissa part after being shifted is used as the first mantissa. In act S1012, a subtraction processing is performed on the exponent part of the data from which the first mantissa is obtained so that its data value remains unchanged, and the processed exponent part is used as the first exponent.

For the above data expressed as $M * 2^{E_{val}}$, the mantissa part M (M is not 0) is shifted left by p bits until the highest bit becomes "1" to obtain the first mantissa $M_{norm}$; to keep the value unchanged, the exponent part needs to be updated: so that $E_{norm} = E_{val} - p$, herein, $E_{norm}$ is the first exponent. The new value is $M_{norm} * 2^{E_{norm}}$, which is equal to the original value $M * 2^{E_{val}}$. It should be noted that in the embodiment, only a left shift operation can be performed for the data mantissa part to obtain the first mantissa $M_{norm}$.

In act S102, a register address is formed according to the first exponent and the first mantissa of the data.

According to one embodiment of the present disclosure, the number of bits of the register identification (usually corresponding to the register address) is determined. Because the address bit width allocated to the registers by the processor or programmable controller is known (the address bit width allocated to the registers by the processor or programmable controller is a preset number of bits), what needs to be determined is how many bits are used to store (identify) exponent information and how many bits are used to store (identify) mantissa information in the known register address bit width (preset number of bits). A statistical method 10 of radar data includes following operations.

A search is performed in the preset data sequence after the preset data sequence being normalized to obtain a maximum value and a minimum value of the first exponent. A search is performed in the normalized data sequence $\{d_1, d_2...d_n\}$, where each data $d_i$ in the normalized data sequence $\{d_1, d_2...d_n\}$ consists of a first exponent $E_{norm\_di}$ and a first mantissa $M_{norm\_di}$, and the maximum value and minimum value of the extracted first exponent are noted as $E_{norm\_max}$ and $E_{norm\_min}$, respectively.

A first number of bits in the register identification (register address) configured to store exponent information is determined based on the maximum value and minimum value of the first exponent. Assuming that the total bit width of the register identification (register address) is W bits, where the high K bits are configured to store exponential information, the low W-K bits are configured to store mantissa information, the integer K satisfies:

$$E_{norm\_max} - E_{norm\_min} < 2^K,$$

$$2^{K-1} < E_{norm\_max} - E_{norm\_min}$$

K that satisfies this condition is unique.

Therefore, according to the first number K of bits in the register identification (register address) configured to store exponent information and a preset number W of bits of the register identification (register address), a second number W-K of bits in the register identification (register address) configured to store mantissa information is determined.

The above embodiments provide for determining the number of bits for storing data exponent information, and the number of bits for storing mantissa information, based on the preset number of bits of register identification (register address). Usually, the exponent information needs to be stored accurately, while the mantissa information can be stored after simplification and combination. Under a situation that the processor or programmable controller has limited memory addresses allocated to the registers, the above embodiments can process the preset data sequence as needed and quickly determine the number of bits for storing data exponent information and the number of bits for storing the mantissa information. Exponential information and mantissa information of data can be accurately stored when the memory address allocated to the register by the processor or the programmable controller is sufficient to cover all the information bits, and these embodiments are also within the scope of protection of the present disclosure. Moreover, the method for determining the number of bits for storing data exponent information and the number of bits for storing mantissa information according to the preset number of bits of register identification (register address) provided by the present disclosure can improve the speed of data statistics and save the computing power in the statistical process without affecting the subsequent calculation results.

The above-mentioned register address can be a real memory address allocated to the register by the processor or the programmable controller, and can alternatively be a virtual address or a pointer.

After the number of bits of the register address, the first number of bits configured to store (identify) exponent information and the second number of bits configured to store (identify) mantissa information are determined, a method for generating a corresponding register address for each data in the preset data sequence is described below.

According to an embodiment of the present disclosure, in the above act S102, the generating register address according to the first exponent and the first mantissa of the data includes acts S 1021 to S 1023. Herein, in act S1021, a first exponent serial number is obtained according to the first exponent, the first exponent serial number has the first number of bits configured to store exponent information. Herein, the first exponent serial number is obtained according to the first exponent of the each data and the minimum value of the first exponents in the preset data sequence.

For example, the first exponent of one data $d_i$ in the normalized data sequence $\{d_1, d_2...d_n\}$ is $E_{norm\_di}$, and the corresponding first exponent number of data $d_i$ is:

$$E_{norm\_di} - E_{norm\_min}$$

Following the above embodiment, the preset bit number of the register identification is W, wherein the first number of bits configured to store the exponent information is K, because the first number of bits is calculated from $E_{norm\_max} - E_{norm\_min}$, the first exponent serial number is within the range of $E_{norm\_max} - E_{norm\_min}$, and can be represented by K bits.

In act S1022, a first mantissa serial number is obtained according to a preset one or more significant bits of the first mantissa, the first mantissa serial number has the second number of bits configured to store mantissa information.

For example, a data $d_i$ in the normalized data sequence $\{d_1, d_2...d_n\}$ has a first mantissa of $M_{norm\_di}$, and the bits after the most significant bit " 1" of the first mantissa $M_{norm\_di}$ are intercepted, and the intercepted bit width is W-K bits to obtain the first mantissa serial number $M_{norm\_di}{}'$.

In act S1023, the first exponent serial number and the first mantissa serial number are combined to form the register address. Let the address of the register with total bit width W bits be bin_cnt_addr_$d_i$, then:

$$bin\_cnt\_addr\_d_i = (E_{norm\_d_i} - E_{norm\_min}) * 2^{W-K} + M_{norm\_di}{}'$$

Herein, $E_{norm\_di}$ - $E_{norm\_min}$ is the relative exponent, and $M_{norm\_di}'$ is the high bit of the mantissa.

The first exponential serial number is placed at the high bits of the register address and the first mantissa serial number is placed at the low bits of the register address, a sequential retrieval is performed for the register address, i.e., the data volume is sorted from smallest to largest. According to the sequential retrieval for register addresses, the values stored in the registers are output to form a statistical histogram with the horizontal axis as the data volume bin (energy bin, velocity bin, etc.) and the vertical axis as the number of samples corresponding to the data volume bin.

According to an embodiment of the present disclosure, the present disclosure provides a method 10 of data processing that can be applied to the processing of millimeter wave radar data, etc. In act S103, the value in the corresponding register can be adjusted according to the register address.

For example, in the above embodiment, the corresponding register address for a data $d_i$ in the normalized data sequence $\{d_1,d_2...d_n\}$ is:

$$\text{bin\_cnt\_addr}\_d_i = (E_{norm\_d_i} - E_{norm\_min}) * 2^{W-K} + M_{norm\_di}'$$

The value in the register with register address $(E_{norm\_di} - E_{norm\_min}) * 2^{W-K} + M_{norm\_di}'$ is added by 1.

For each data in the normalized data sequence $\{d_1,d_2...d_n\}$, the first exponent serial number and the first mantissa serial number are generated according to its first exponent and first mantissa, and then the corresponding register address is generated, and the value in the corresponding register is added by 1. After traversing all the data in the data sequence $\{d_1,d_2...d_n\}$, the statistical processing for the radar processing is completed.

An embodiment for the register address and the value stored in the register obtained using the data processing method 10 provided by the present disclosure is shown for example in FIG. 2.

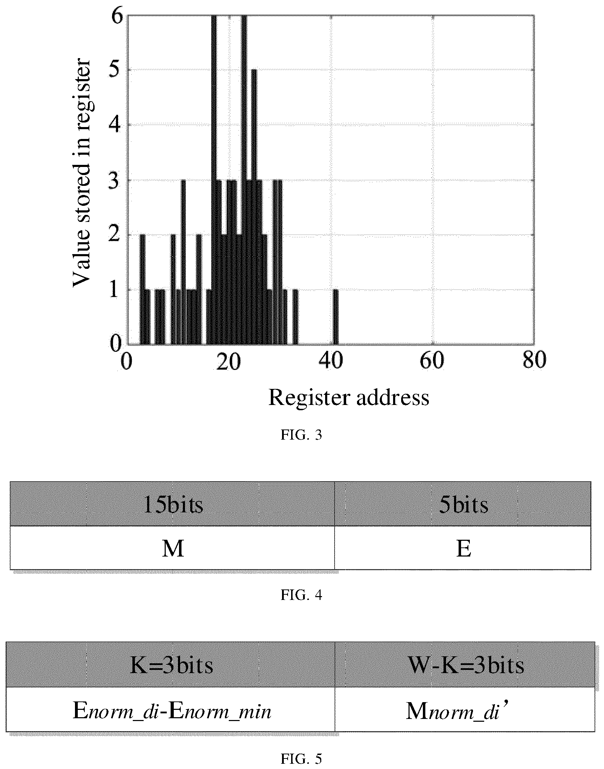

According to one embodiment of the present disclosure, the statistical method 10 of radar data provided by the present disclosure includes generating a statistical histogram with the register address as the abscissa and the value in the register as the ordinate. One embodiment for generating a statistical histogram using the statistical method 10 of radar data provided by the present disclosure is shown for example in Figure 3.

The processing method 10 of radar data provided in the present disclosure will be described below by taking two-dimensional FFT power data as an example.

As shown in FIG. 4, it is assumed that the power data output by two-dimensional FFT is stored in the illustrated format, where the bit width of the exponent part E is 5bits, the bit width of the mantissa part M is 15bits, both E and M are unsigned numbers, the total bit width is 20 bits, the value being represented is $M * 2^{-E}$.

It is assumed that the power data for one 20 bits is:
20'b0011_0110_0010_1000_1111,

Then M = 15'b001_1011_0001_0100,E = 5'b0_1111 = 15, according to the unified data representation method described above:

$$M * 2^{E_{val}}, \text{herein}, \ E_{val} = (-1)^{se} * (E - \text{offset})$$

Then:

$$E_{val} = -E = -15.$$

Because the highest 2 bits of M are "0", then M is shifted 2 bits left to obtain the first mantissa:

$$M_{norm} = 13'b110\_1100\_0101\_0000$$

To keep the value unchanged, it is needed to update the exponent part to be the first exponent:

$$E_{norm} = E_{val} - 2 = -17$$

Assuming that the maximum value $E_{norm\_max}$ and the minimum value $E_{norm\_min}$ of the first exponent in the normalized data sequence are -12, -19, respectively, then K = 3 satisfies:

$$E_{norm\_max} - E_{norm\_min} < 2^K,$$

$$2^{K-1} < E_{norm\_max} - E_{norm\_min}$$

Assuming that the address bit width allocated to the register by the processor or programmable controller is W=6bits, the storage format of the register is as shown in FIG. 5, where K=3bits is used to be configured to store exponent information and W-K=3bits is used to be configured to store mantissa information.

For each data $d_i$ in the preset data sequence after being normalized $\{d_1, d_2 \dots d_n\}$, the first exponent serial number (relative exponent) is obtained by making the difference $E_{norm\_di}$-$E_{norm\_min}$ between the first exponent $E_{norm\_di}$ of the data and the minimum value of the first exponents in the data sequence, for the power data 20'b0011_0110_0010_1000_1111 in the above embodiment, then:

$$E_{norm\_di} - E_{norm\_min} = -17 - (-19) = 2 = 3'b010$$

Then, according to the first mantissa $M_{norm\_di}$ of the data, the three highest bits after the highest bit 1 are removed to obtain the first mantissa serial number $M_{norm\_di}$'. For the power data 20'b0011 0110 0010_1000_1111 in the above embodiment, then:

$$M_{norm\_di}{}' = 3'b101$$

Then, as shown in FIG. 5, the high 3 bits of the register address are used to store $E_{norm\_di}$-$E_{norm\_min}$ and the low 3 bits are used to store $M_{norm\_di}$' to generate its corresponding 6-bit register address. For the 20-bits power data 20'b0011 0110 0010_1000_1111 in the above embodiment has the corresponding register address:

$$bin\_cnt\_addr\_d_i = (E_{norm\_d_i} - E_{norm\_min}) * 2^3 + M_{norm\_di}{}' = 6'b01\_0101$$

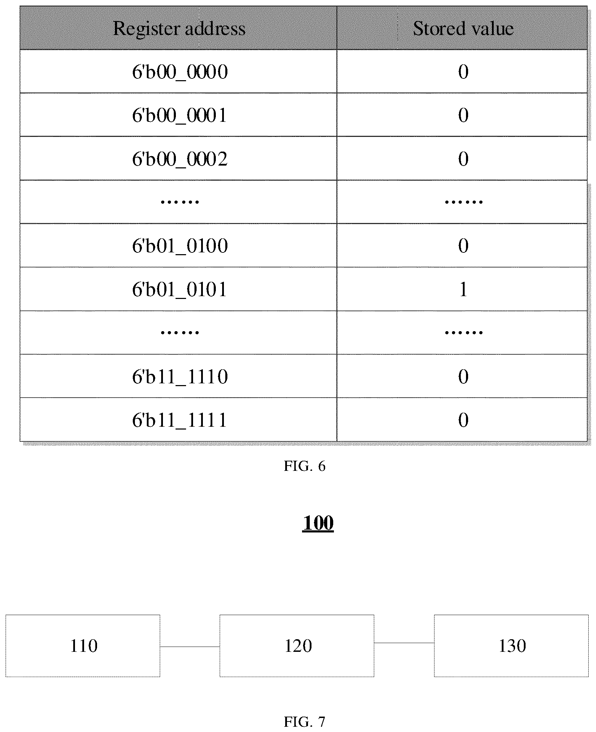

The generated register address (register identification) is shown in FIG. 6, wherein the value in the register with the register address of 6'b01_0101 is added by 1.

In the statistical method 10 of radar data provided by the present disclosure, the register address is positively correlated with the size of data (energy value, velocity value, etc.) falling into the bin, which is convenient for searching the bin where the sample is located.

According to one embodiment of the present disclosure, in the statistical method 10 of radar data provided by the present disclosure, the radar data includes one or more of sampled data obtained after sampling radar raw data, two-dimensional FFT power data obtained after fast Fourier transform of the sampled data, and fixed-point or floating-point non-negative real data generated in other processing procedures.

According to an embodiment of the present disclosure, the present disclosure further provides a method for data restoration through the statistical histogram described above. In various applications of the statistical histogram above, searching median bin, maximum frequency bin, etc. are included, after searching and locking the target bin, the first exponent and the first mantissa are separated from the register address corresponding to the target bin, and the first exponent and the first mantissa are restored to original sample data according to the inverse transformation algorithm to adapt to the subsequent application of target statistics.

According to an embodiment of the present disclosure, as shown in FIG. 7, the present disclosure further provides an apparatus 100 that can be configured to perform radar data statistics, wherein the radar data includes a preset data sequence, and the data in the preset data sequence includes an exponent part and a mantissa part. The apparatus 100 that can be configured to perform radar data statistics includes a data processing unit 110, an address generation unit 120 and a counting unit 130. The data processing unit 110 is configured to receive the radar data, normalize the preset data sequence, and obtain a first exponent and a first mantissa of the data. The address generation unit 120 is coupled to the data processing unit 110 and configured to generate a register address based on the first exponent and the first mantissa of the data. The counting unit 130 is coupled to the address generation unit 120 and configured to add 1 to the value in the corresponding register according to the register address.

According to an embodiment of the present disclosure, wherein the data processing unit 110 is configured to: shift a mantissa part of data until the first bit of the mantissa part is 1, and the mantissa part after being shifted is used as the first mantissa; perform a subtraction processing on the exponent part of the data from which the first mantissa is obtained so that its data value remains unchanged, and the processed exponent part may be used as the first exponent.

According to one embodiment of the present disclosure, wherein the register address has a preset number of bits, and the apparatus 100 which could be configured to perform radar data statistics includes a search unit and a bit width determination unit. The search unit is coupled to the data processing unit 110 and configured to search in the preset data sequence after being normalized to obtain the maximum value and minimum value of the first exponent.

The bit width determination unit is coupled to the search unit and configured to determine a first number of bits in the register address configured to store exponent information according to the maximum value and the minimum value of the first exponent; determine a second number of bits in the register address configured to store mantissa information according to the first number of bits in the register address configured to store the exponent information and the preset number of bits in the register address.

According to one embodiment of the present disclosure, wherein the address generation unit 120 is coupled to the bit width determination unit, the address generation unit 120 is configured to obtain a first exponent serial number according to the first exponent of data, the first exponent serial number has the first number of bits configured to store exponent information; obtain a first mantissa serial number based on a preset one or more significant bits of the first mantissa of data, the first mantissa serial number has the second number of bits configured to store mantissa information; combine the first exponent serial number with the first mantissa serial number to form the register address.

According to one embodiment of the present disclosure, wherein the address generation unit 120 is configured to generate the first exponent serial number based on the first exponent of data and the minimum value of the first exponents in the preset data sequence.

According to an embodiment of the present disclosure, the apparatus 100 provided by the present disclosure that can be configured to perform radar data statistics includes a histogram generation unit. The histogram generation unit is coupled with the counting unit 130, and is configured to read the register address and the value stored in the register after all data in the preset data sequence are counted, and generate a statistical histogram with the register address as the abscissa and the value in the register as the ordinate.

Other definitions of the apparatus 100 that can be configured to perform radar data statistics are similar to those of the statistical method 10 of radar data described above, and may be referred to the above description of the statistical method 10 of radar data and will not be repeated here.

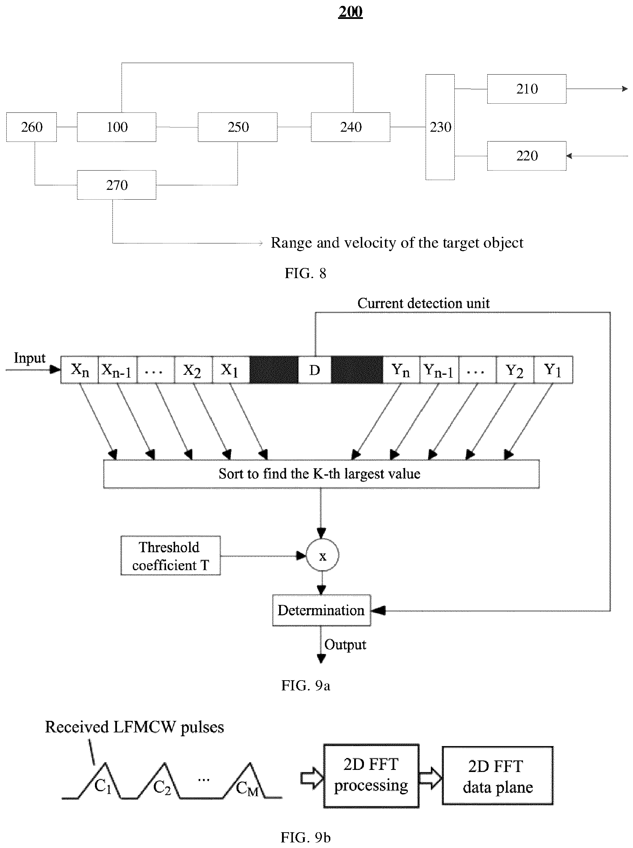

According to one embodiment of the present disclosure, as shown in FIG. 8, the present disclosure further provides a radar sensor 200 including a transmitting unit 210, a receiving unit 220, a mixing unit 230, a sampling unit 240, a FFT unit 250, an apparatus 100 that can be configured to perform radar data statistics as described above, and an interference determination unit 260. Herein, the transmitting unit 210 is configured to transmit a continuous wave with a frequency that linearly varies with time. The receiving unit 220 is configured to receive a millimeter wave signal including an echo transmitted by the transmitting unit 210 and reflected by a target object. The mixing unit 230 is coupled to the transmitting unit 210 and the receiving unit 220 respectively and is configured to mix the millimeter wave signal received by the receiving unit 230 and the continuous wave signal transmitted by the transmitting unit 210 to generate a mixed signal. The sampling unit 240 is coupled with the mixing unit 230 and configured to sample the mixed signal and output sampled data after analog-to-digital conversion. The FFT Unit 250 is coupled to the sampling unit 240 and configured to perform a two-dimensional fast Fourier transform on the sampled data and output one-dimensional Fourier transform data and two-dimensional Fourier transform data respectively.

The apparatus 100 that can be configured to perform radar data statistics as described above is coupled to the sampling unit 240, the FFT unit 250, respectively, and configured to: perform statistics on one or more of the sampled data, the one-dimensional FFT data, and the two-dimensional FFT data; read a register address and a value stored in the register after statistics on all data is completed, and generate a statistical histogram with the register address as an abscissa and the value in the register as an ordinate. The interference determination unit 260 is coupled to the apparatus 100 that can be configured to perform radar data statistics, and is configured to perform one or more of interference detection, constant false alarm processing, and side track detection on the mixed signal according to the statistical histogram.

According to one embodiment of the present disclosure, in the radar sensor 200, the apparatus 100 that can be configured to perform radar data statistics performs statistics on two-dimensional FFT data to obtain a sample quantity corresponding to a plurality of energy values, and the interference detection unit 260 performs interference detection according to the sample number corresponding to the plurality of energy values.

According to one embodiment of the present disclosure, the interference detection unit 260 calculates the sum of energy in a preset energy bin according to the sample number corresponding to the plurality of energy values; and determines whether the mixed signal includes an interference signal according to the sum of energy.

According to one embodiment of the present disclosure, in the radar sensor 100, the apparatus 100 that can be configured to perform radar data statistics performs statistics on two-dimensional FFT data to obtain sample quantity corresponding to a plurality of velocity values, and the interference detection unit 260 determines whether there are large obstacles such as lane changes and guardrails beyond the radar detection range according to the sample quantity corresponding to the plurality of velocity values.

According to one embodiment of the present disclosure, in the radar sensor 200, the apparatus 100 that can be configured to perform radar data statistics performs statistics on two-dimensional FFT data to obtain sample quantity corresponding to a plurality of energy values, and the interference detection unit 260 performs constant false alarm processing according to the sample quantity corresponding to the plurality of energy values.

According to one embodiment of the present disclosure, the interference detection unit 260 obtains a median of energy values according to the sample quantity corresponding to the plurality of energy values, and sets a dynamic threshold (interference detection threshold) according to the median of the energy values.

It should be noted that in practical application, after finding the bin where the median is located, the sample data corresponding to the bin can be restored by the bin address, so that the restored data format is consistent with the sample data format.

According to one embodiment of the present disclosure, as shown in FIG. 8, the radar sensor 200 provided by the present disclosure includes a target detection unit 270. The target detection unit 270 is coupled to the FFT Unit 250 and the interference determination unit 260, respectively, and is configured to obtain the range and velocity of a target object in the one-dimensional FFT data and/or the two-dimensional FFT data according to the interference detection threshold after the constant false alarm processing when the interference determination unit 260 determines that an interference signal is not included in the mixed signal.

The statistical method of radar data provided by the present disclosure can be applied to various radar data such as ADC sampling data, two-dimensional FFT power data, non-negative real data of other formats, etc. The classification statistics performed by the method is fast in speed and low in computational complexity, and radar data processing efficiency is improved. The apparatus provided by the present disclosure which can be configured to perform radar data statistics, is easy to be implemented in hardware, and provides hardware support for noise floor estimation, interference detection, constant false alarm processing or side track detection by using the above-mentioned various radar data subsequently. The radar sensor provided by the present disclosure and integrated with the apparatus which can be configured to perform radar data statistics uses detection data (2D FFT data) to perform interference detection while detecting the range and velocity of a target object, which simplifies the operation process, saves the computing power, and improves the processing speed of radar raw data.

The following is a detailed description of the application of the above-mentioned histogram hardware accelerator in an on-board millimeter wave radar system based on the histogram hardware accelerator described in the above embodiment, by taking constant false alarm detection as an example.

Due to the existence of interference signals, the range-Doppler spectrum generated after two-dimensional fast Fourier transform of mixed signals by the signal processing unit may present false alarm. For the false alarm problem, it is needed to set an appropriate detection threshold. If the detection threshold is set too high, some weak targets cannot be detected. If the detection threshold is set too low, some noise energy may be detected, resulting in false alarm. The detection threshold is usually set according to the distance between the target object and the radar. Because the radar has the minimum range resolution, different detection thresholds can be set according to different range gates.

Commonly used Constant False Alarm Rate (CFAR) detection algorithms include CA-CFAR, SOGO-CFAR, OS-CFAR algorithms, etc. Herein, OS-CFAR is widely used because of its excellent detection performance. As shown in FIG. 9a, OS-CFAR needs to sort the input data, for example, sort the energy values corresponding to the 2D-FFT plane, select the K-th largest energy value and multiply it by the coefficient T, and the result is taken as the first detection threshold. Then, the energy value corresponding to the 2D-FFT plane at the coordinate to be detected is compared with the first detection threshold, and when the corresponding energy value is greater than the first detection threshold, the sample at the coordinate is determined as the target; when the corresponding energy value is less than or equal to the first detection threshold, the sample at the coordinate is determined as noise, and is ignored without processing. In the operation of OS-CFAR, the time complexity of simple sorting is $O(N^2)$, and the time complexity of fast sorting is $O(N\log(N))$, where N is the sample quantity of energy value. When the sample quantity N increases, no matter which sorting method is adopted, the growth trend of complexity is greater than linear growth. In the application scenario of automotive radar, there is a relatively high demand for real-time algorithm processing. With the increasing resolution of automotive radar, the amount of 2D-FFT data is increasing. At this time, the time-consuming of the CFAR detection will become the bottleneck restricting the real-time performance of the system.

In order to solve the above problem of constant false alarm rate in the radar echo, based on the histogram hardware accelerator recorded in the embodiment of the present disclosure, the traditional sorting operation can be replaced by histogram statistics to achieve the OS-CFAR method based on histogram statistics, thereby effectively reducing the processing time while obtaining an approximate detection threshold estimation result. An Ordered Statistical Constant False Alarm Rate (OS-CFAR) detection method based on a histogram may include following acts.

In act S101, after discrete spectrum analysis such as analog-to-digital conversion, sampling and two-dimensional fast Fourier transform is performed on the signal received by the radar, a range-Doppler spectrum (RD spectrum) can be obtained, which can include data information related to target parameters such as range dimension, velocity dimension and energy dimension.

In act S102, in the range-Doppler spectrum described above, the energy distribution statistics can be performed along the velocity dimension for a preset range gate, to obtain the sample number corresponding to a plurality of first energy values. The energy distribution statistics are completed by the histogram hardware accelerator described in the above embodiments. For example, the plurality of first energy values are normalized to obtain a first exponent and a first mantissa of each first energy value; the register address is generated according to the first exponent and the first mantissa of each first energy value; and the value in the corresponding register is adjusted according to the register address.

In addition, when energy distribution statistics is performed by the histogram hardware accelerator described above, the mantissa parts of the plurality of first energy values can be shifted until the first bit of the mantissa part is 1, and the mantissa part after being shifted can be used as the first mantissa; a subtraction processing is performed on an exponent part of the plurality of first energy values from which the first mantissa is obtained, so that a value of a corresponding first energy value remains unchanged, and the processed exponent part can be used as the first exponent; the first number of bits in the register address configured to store exponent information is determined according to a maximum value and a minimum value of first exponents of the plurality of first energy values; the second number of bits in the register address configured to store mantissa information is determined according to the first number of bits in the register address configured to store exponent information and the preset number of bits in the register address; a first exponent serial number is obtained according to the first exponent of each first energy value, the first exponent serial number has the first number of bits configured to store exponent information; a first mantissa serial number is obtained according to a preset one or more significant bits of the first mantissa of each first energy value, the first mantissa serial number may have the second number of bits configured to store mantissa information; the first exponent serial number is combined with the first mantissa serial number to generate the register address; the value in the corresponding register is added by 1 according to the register address.

In act S103, the K-th sample can be searched according to the sample number corresponding to the plurality of first energy values, wherein K can be a preset ordinal number, that is, K is a positive integer. After being processed by the above histogram hardware accelerator, the K-th sample is searched according to the values stored in the registers corresponding to the plurality of register addresses. In the above statistical histogram, according to the statistical histogram, the total number of samples for the first energy value can be obtained as N, and K=N/2.

In act S104, a detection threshold is set according to the first energy value of the K-th sample. The value of K is related to the noise distribution in the application scenario. Optionally, the above K-th first energy value can be multiplied by a preset multiplier, and the result is set as the detection threshold of the corresponding range gate. For example, the K-th first energy value is multiplied by 2, and the corresponding result is the corresponding range detection threshold. The coefficient T can be used to reflect the real noise floor.

The algorithm such as OS-CFAR in the above constant false alarm detection method can reduce the time complexity of the sorting operation from $O(N)^2$ or $O(N\log(N))$ to the time complexity $O(N)$ of histogram statistics, which thereby significantly improves the real-time performance of signal processing and is more suitable for application scenarios configured as on-board radar.

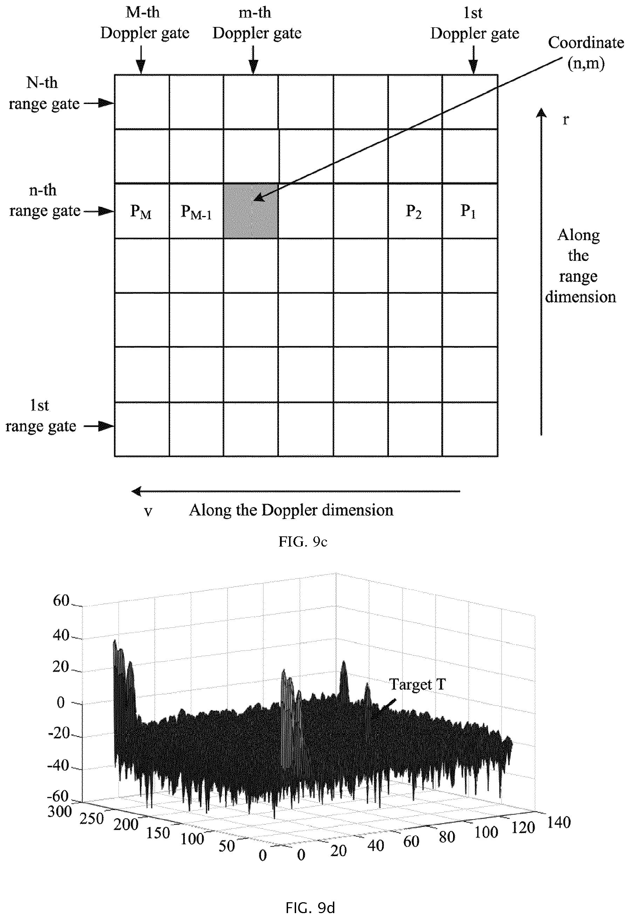

As shown in FIGS. 9b to 9c, in a radar system, the transmitter can transmit M LFMCW waveform pulses per frame. After receiving these M LFMCW waveform pulses, the receiver can sample each pulse, assuming that N equally spaced sampling points are obtained in each pulse. Then, N-points range dimension FFT is performed on each pulse of N sampling points to obtain M groups of range dimension N-points FFT data, and M data with the same index value (index value range dimension can be 1, 2,... n... N) are taken out from M groups of N- points range dimension FFT data to perform M-points Doppler dimension FFT, to obtain N groups of M-points Doppler dimension FFT data, that is, to obtain 2D FFT data plane as shown in FIG. 9c.

As shown in FIG. 9c, assuming that for a certain coordinate to be detected on the n-th range gate, the reference region is selected as the range gate, based on M 2D FFT energy data of the range gate along the Doppler dimension: $P_1$, $P_2$... $P_M$, after taking logarithm of these energy data, histogram statistics is performed to find out the bin where the K-th largest energy is located from the statistical result, and the energy value obtained by multiplying the energy value of the detection bin by a coefficient can be used as the detection threshold.

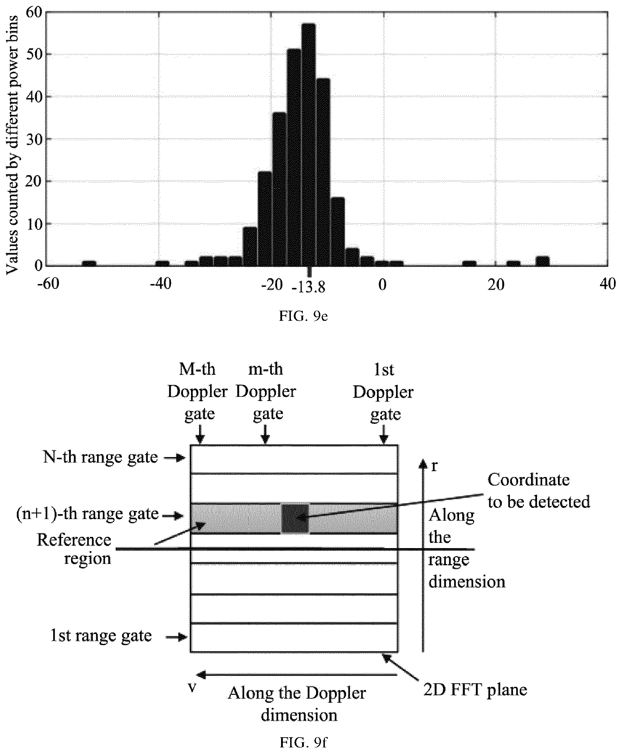

As shown in FIG. 9d, taking the actual LFMCW radar 2D FFT data as an example, if the number of the range dimension FFT points is 256, the portion with the range gate index value of 0 to 127 can be obtained due to symmetry, that is, the number of the Doppler dimension FFT points can also be 256. In the figure, the index value of the range gate where the target T is located is 56. The statistical result of the 2D FFT energy histogram on the range gate is shown in FIG. 9e, and the number of bin partitions is set to 32. Assuming that the energy of the 128th sample from smallest to largest is taken as the decision threshold, the energy bin in which it is located calculated from the histogram is about-13.8 dB, and this energy value can be used as the detection threshold value of the range gate.

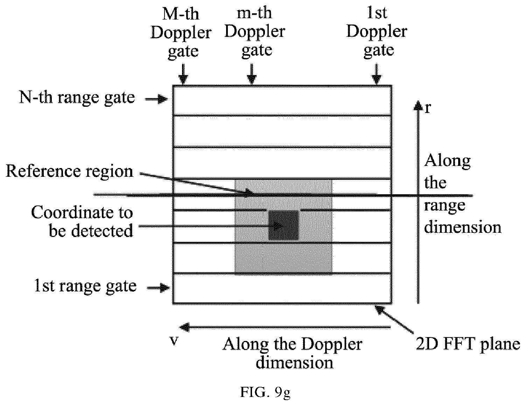

In some alternative embodiments, based on the relevant description in the above embodiments, there are various ways to set the statistical bin range of histogram statistics, and the maximum value and minimum value of the statistical bin can be determined in advance; the maximum value and the minimum value of the statistical bin may be obtained from the input data, such as using the maximum value of the input data as the maximum value of the statistical bin, the minimum value of the input data as the minimum value of the statistical bin, etc. Similarly, there are various ways to select the reference region, as described in the embodiment of the present disclosure, the range gate can be selected as a reference region, i.e., the reference region shown in FIG. 9f, or it can be the reference region around the target to be detected as shown in FIG. 9g. In addition, for the preprocessing of input energy, the logarithm with a base of 2 can be taken, the logarithm with a base of 10 can alternatively be taken, which can be set according to actual needs, and the selection of the order of magnitude K can be adjusted according to actual needs, for example, K can be set to N/2, where N can be the total number of samples in the region to be detected.

In an embodiment of the present disclosure, by performing histogram statistics on the energy values of sample points in the input reference region, the energy bin of the statistical histogram in which the K-th largest energy value is located can be quickly found because the energy bins of the histogram after statistics are ordered from smallest to largest and the number of samples in each bin is known, and the energy within that bin can subsequently be used as the estimated detection threshold. Compared with the time complexity of OS-CFAR for sorting operation, which is O(N2) or O(Nlog(N)), the time complexity of OS-CFAR based on histogram statistics in the embodiment of the present disclosure is only O(N), i.e., much lower than the time complexity of sorting operation, which in turn can achieve a significant improvement in real-time performance.

Based on the same histogram hardware accelerator or the same architecture described above, an interference detection method based on histogram statistics can be implemented, which includes following acts.

In act S201, a two-dimensional fast Fourier transform is performed on the received signal to obtain a range-Doppler spectrum, wherein the range-Doppler spectrum includes a range dimension, a velocity dimension and an energy dimension.

In act S202, in the range-Doppler spectrum, the distribution statistics of energy dimension is performed along the velocity dimension for a preset range gate to obtain an energy statistical histogram. The distribution statistics of the energy dimension is completed by the above histogram hardware accelerator, that is, the histogram statistics is performed for the first energy value of the energy dimension, which includes: normalizing the plurality of first energy values to obtain a first exponent and a first mantissa of each first energy value; generating a register address according to the first exponent and the first mantissa of each first energy value; and adjusting the value in the corresponding register according to the register address.

In act S103, according to the statistical characteristics of the energy statistical histogram, interference detection is performed on the preset range gate. After the energy statistic is completed by the above histogram hardware accelerator, the statistic characteristic of the energy statistic histogram is reflected in a plurality of register addresses and the values stored in the plurality of register addresses. According to the plurality of register addresses and the values stored therein, a series of operations such as retrieval, summation/partial summation can be performed, which in turn completes the interference detection of the preset range gate.

Based on the same histogram hardware accelerator or the same architecture described above, a detection method for a stationary target object based on histogram statistics can be implemented, which includes following acts.

In act S301, a two-dimensional fast Fourier transform is performed on the received signal to obtain a range-Doppler spectrum, wherein the range-Doppler spectrum includes a range dimension, a velocity dimension and an energy dimension.

In act S302, in the range-Doppler spectrum, velocity distribution statistics is performed for valid target points to obtain sample quantity corresponding to a plurality of first velocity values. The velocity distribution statistics is completed by the above histogram hardware accelerator, that is, histogram statistics is performed on a plurality of first velocity values, including: normalizing the plurality of first velocity values to obtain a first exponent and a first mantissa of each first velocity value; generating a register address according to the first exponent and the first mantissa of each first velocity value; and adjusting the value in the corresponding register according to the register address.

In act S303, it is determined whether there is a stationary target object according to the sample quantity corresponding to the plurality of first velocity values. After being processed by the above histogram hardware accelerator, it is determined whether there is a stationary target object according to the values stored in the registers corresponding to the plurality of register addresses.

In some alternative embodiments, based on similar ideas described above, the histogram hardware accelerator based on the same or similar architecture may be configured to perform signal processing/data processing/detection methods such as noise floor estimation, etc., which require obtaining statistical characteristics of the output data.

Alternatively, the above related hardware structure based on the histogram hardware accelerator can be integrated inside the chip (or integrated circuit structure) as the hardware accelerator for the associated algorithm, i.e., the algorithm of the related signal processing operation such as noise floor estimation, interference detection, OS-CFAR and side track detection based on histogram statistics in the chip can be realized based on the same histogram hardware accelerator.

The embodiment of the present disclosure further provides an integrated circuit, which can include a radio frequency module, an analog signal processing module, a digital signal processing module, etc., connected sequentially; the radio frequency module may be configured to generate a radio frequency transmit signal and receive a radio frequency receive signal; the analog signal processing module may be configured to perform frequency reduction processing on the radio frequency receive signal to obtain an intermediate frequency signal; the digital signal processing module is configured to perform analog-to-digital conversion on the intermediate frequency signal to obtain a digital signal; and the data processing module can be configured to perform processing operations such as sampling, discrete spectrum processing and digital data analysis of the digital signal to realize the detection of target information; herein, the data processing module may perform histogram statistics based on the method described in any embodiment of the present disclosure.

In an alternative embodiment, the integrated circuit in the embodiment of the present disclosure may be a millimeter wave radar chip. The types of digital function modules in the integrated circuit can be determined according to the actual requirements. For example, in the millimeter wave radar chip, the data processing module can be configured to perform operations such as range-dimensional Doppler transform, velocity-dimensional Doppler transform, constant false alarm detection, direction of wave arrival detection, point cloud processing, etc., for obtaining information such as range, angle, velocity, shape, size, surface roughness and dielectric characteristics of the target.

Alternatively, the integrated circuit may be of an AiP (Antenna-In-Package) chip structure, an AoP (Antenna-On-Package) chip structure, or an AoC (Antenna-On-Chip) chip structure.

In an alternative embodiment, the integrated circuit may be identical to the radar chip set forth in any embodiment of the present disclosure, i.e., they may have the same structure and function as each other, or may be combined with each other for forming a cascade structure, which will not be repeated here for simplicity of illustration, but it should be understood that the techniques which should be familiar by those skilled in the art based on the contents documented in the present disclosure are included within the scope documented in the present disclosure.

In one embodiment, the present disclosure further provides a radio device including: a carrier; an integrated circuit as described in any of the above embodiments, which may be provided on the carrier; an antenna, the antenna is provided on the carrier, or the antenna is integrated with the integrated circuit as an integral device provided on the carrier (i.e., at this situation, the antenna may be an antenna provided in an AiP, AoP or AoC structure); herein, the integrated circuit is connected with the antenna (i.e., at this situation, the sensor chip or the integrated circuit is not integrated with the antenna, such as the conventional SoC, etc.), and is used for receiving and transmitting radio signals. Herein, the carrier may be a printed circuit board (PCB), and the first transmission line may be a PCB trace or other type of waveguide structure, etc.

In one embodiment, the present disclosure further provides a radio device, which may include a carrier; an integrated circuit as described in any of the above embodiments; an antenna, the antenna is provided on the carrier, or the antenna is integrated with the sensor chip or the integrated circuit as an integral device provided on the carrier (i.e., at this situation, the antenna can be an antenna provided in an AiP or AoC structure); herein, the sensor chip or the integrated circuit is connected with the antenna through the first transmission line (i.e., the integrated circuit is not integrated with the antenna at this situation, and can be a SoC chip, etc.), and is used for receiving and transmitting radio signals. Herein, the carrier can be a printed circuit board PCB (such as development board, data acquisition board or main board of the device, etc.).

In one embodiment, the present disclosure further provides a terminal device, including: a device body; and a radio device provided on the device body, the radio device is as described in any of the above embodiments; herein, the radio device can be used to realize target detection.

Alternatively, on the basis of the embodiments described above, in one alternative embodiment of the present disclosure, the radio device may be provided outside or inside the device body, while in other alternative embodiments of the present disclosure, the radio device can be partially provided inside and partially provided outside the device body. The embodiments of the present disclosure are not limited to this, it is up to the actual situation.

In an alternative embodiment, the above device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

The radio device may be a radio device described in any embodiment of the present disclosure, and the structure and operating principle of the radio device have been described in detail in the above embodiments, and will not be repeated here.

Alternatively, the radio device may achieve functions such as target detection and/or communication by transmitting and receiving radio signals to provide detection target information and/or communication information to the device body, thereby assisting or even controlling the operation of the device body.

For example, when the above-mentioned device body is applied to advanced driving assistance system (ADAS), the radio device (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance, pedestrian detection, etc.

The various technical features of the above-described embodiments can be arbitrarily combined, and for the sake of brevity of description, not all possible combinations of the individual technical features of the above-described embodiments have been described; however, as long as there is no conflict in these combinations of technical features, they should be considered to be within the scope of the present specification.

The above-described embodiments are intended to express only the preferred embodiments of the present disclosure and the principles of the techniques employed, and the description thereof is more specific and detailed, but should not therefore be construed as limiting the scope of the invention patent. It is possible for those skilled in the art to make various significant changes, readjustments and substitutions without departing from the scope of the present disclosure. Therefore, although the present disclosure has been described in more detail by the above embodiments, the present disclosure is not limited to the above embodiments, but may include more other equivalent embodiments without departing from the idea of the present disclosure, and the scope of protection of the patent of the present disclosure is defined by the scope of the appended claims.

**Claims**

1. A data processing method, applied to histogram statistics on a preset data sequence,
   wherein each data in the preset data sequence comprises an exponent part and a mantissa part, the method comprising:

   normalizing the preset data sequence to obtain a first exponent and a first mantissa of each data;
   generating a register address according to the first exponent and the first mantissa of each data; and
   adjusting a value in a corresponding register according to the register address.

2. The method of claim 1, wherein normalizing the preset data sequence to obtain the first exponent and the first mantissa of each data comprises:

   shifting the mantissa part of any current data until a first bit of the mantissa part is "1", and taking the mantissa part after being shifted as the first mantissa of the current data;
   performing a subtraction processing on the exponent part of the current data which the first mantissa is obtained, to allow a data value of the current data to remain unchanged, and using the processed exponent part as the first exponent of the current data.

3. The method of claim 1 or 2, wherein the register address has a preset number of bits, the method comprising:

   searching in the preset data sequence after being normalized to obtain a maximum value and a minimum value of the first exponent;
   determining a first number of bits in the register address configured to store exponent information according to the maximum value and the minimum value of the first exponent; and
   determining a second number of bits in the register address configured to store mantissa information according to the first number of bits in the register address configured to store the exponent information and the preset number of bits in the register address.

4. The method of claim 3, wherein generating the register address according to the first exponent and the first mantissa of the data comprises:

   obtaining a first exponent serial number based on the first exponent, the first exponent serial number has the first number of bits configured to store the exponent information;

obtaining a first mantissa serial number based on a preset one or more significant bits of the first mantissa, the first mantissa serial number has the second number of bits configured to store the mantissa information; and combining the first exponent serial number with the first mantissa serial number to generate the register address.

5. The method of claim 4, wherein the first exponent serial number is obtained based on the first exponent of the data and the minimum value of the first exponent in the preset data sequence.

6. The method of claim 1 or 2, wherein adjusting the value in the corresponding register according to the register address comprises:
adding 1 to the value in the corresponding register according to the register address.

7. The method of claim 1 or 2, comprising:
after counting all the data in the preset data sequence, generating a statistical histogram with the register address as an abscissa and the value stored in the register as an ordinate.

8. The method of claim 7, comprising:
locking a preset bin in the statistical histogram, and restoring the register address in the preset bin to the data in the preset data sequence by an inverse transformation algorithm.

9. The method according to any one of claims 1 to 8, wherein the data in the preset data sequence is fixed-point non-negative real data or floating-point non-negative real data.

10. The method of claim 9, wherein the preset data sequence is a data sequence of radar data.

11. The method of claim 10, wherein the radar data comprises one or more of sampled data obtained after sampling an echo signal, two-dimensional FFT velocity dimension data obtained after fast Fourier transform of the sampled data, and energy dimension data obtained by processing the sampled data.

12. An integrated circuit, comprising a radio frequency module, an analog signal processing module, and a digital signal processing module sequentially connected, wherein:

the radio frequency module is configured to generate a radio frequency transmitting signal and receive a radio frequency receiving signal;
the analog signal processing module is configured to perform frequency reduction processing on the radio frequency receiving signal to obtain an intermediate frequency signal;
the digital signal processing module is configured to perform analog-to-digital conversion on the intermediate frequency signal to obtain a digital signal; and
a data processing module is configured to process the digital signal to perform target detection,
wherein the data processing module further comprises a histogram hardware accelerator that performs signal processing according to the method of any one of claims 1 to 11.

13. The integrated circuit of claim 12, wherein the integrated circuit is a millimeter wave radar chip.

14. The integrated circuit of claim 13, wherein the histogram hardware accelerator performs at least one signal processing procedure of noise floor estimation, interference detection, Ordered Statistic Constant False Alarm Rate (OS-CFAR), and side track detection based on the method of any one of claims 1 to 11.

15. A radio device, comprising:

a carrier;
an integrated circuit according to claim 12 or 13, which is provided on the carrier; and
an antenna, the antenna is provided on the carrier, or the antenna is integrated with the integrated circuit as an integral device provided on the carrier,
wherein the integrated circuit is connected to the antenna and configured to transmit the radio frequency transmitting signal and/or receive the radio frequency receiving signal.

16. A terminal device, comprising:

a device body; and

the radio device according to claim 15 provided on the device body,

wherein the radio device may be configured to perform target detection to provide reference information for operation of the device body.

17. A data processing apparatus, applied to histogram statistics on a preset data sequence, wherein each data in the preset data sequence comprises an exponent part and a mantissa part, the apparatus comprising:

a data processing unit, configured to normalize the preset data sequence to obtain a first exponent and a first mantissa of each data;

an address generation unit, coupled to the data processing unit and configured to generate a register address based on the first exponent and the first mantissa of each data; and

a counting unit, coupled to the address generation unit and configured to adjust a value in a corresponding register according to the register address.

18. The apparatus of claim 17, further comprising:

a histogram generation unit, coupled with the counting unit and configured to read a register address and a value stored in the register after all data in the preset data sequence are counted, and generate a statistical histogram with the register address as an abscissa and the value in the register as an ordinate.

19. A radar sensor, comprising:

a transmitting unit, configured to transmit a continuous wave with a frequency that linearly varies with time;

a receiving unit, configured to receive an echo signal;

a mixing unit, coupled with the transmitting unit and the receiving unit respectively and configured to perform frequency reduction processing on the echo signal to obtain an intermediate frequency signal;

a sampling unit, coupled with the mixing unit and configured to sample the intermediate frequency signal after being analog-to-digital converted, to output the sampled data;

a FFT unit, coupled with the sampling unit and configured to perform two-dimensional fast Fourier transform on the sampled data and output one-dimensional Fourier transform data and two-dimensional Fourier transform data respectively; and

the apparatus configured for data processing according to claim 17 or 18, coupled to the sampling unit and the FFT unit, respectively, configured to:

perform statistics on one or more of the sampled data, two-dimensional FFT velocity dimension data obtained after fast Fourier transform on the sampled data, and energy dimension data obtained by processing the sampled data; and

read the register address and the value stored in the register after statistics on all data is completed, and generate a statistical histogram with the register address as an abscissa and the value in the register as an ordinate.

20. The radar sensor of claim 19, further comprising:

an interference determination unit, coupled to the apparatus configured for data processing and configured to:

perform one or more of interference detection, constant false alarm processing and side track detection on the intermediate frequency signal according to the statistical histogram.

21. The radar sensor of claim 20, further comprising:

a target detection unit, coupled to the FFT unit and the interference determination unit, respectively, and configured to:

obtain a range and a velocity of a target object in the one-dimensional FFT data and/or the two-dimensional FFT data according to an interference detection threshold after the constant false alarm processing in a case that the interference determination unit determines that an interference signal is not comprised in the intermediate frequency signal.

# Data processing method 10

| Normalize the preset data sequence to obtain a first exponent and a first mantissa of each data | S101 |

| Generate a register address according to the first exponent and the first mantissa of each data | S102 |

| Adjust a value in a corresponding register according to the register address | S103 |

FIG. 1

| Register address | Stored value |
|---|---|
| 6'b00_0000 | 3 |
| 6'b00_0001 | 5 |
| 6'b00_0002 | 11 |
| ...... | ...... |
| 6'b11_1110 | 2 |
| 6'b11_1111 | 1 |

FIG. 2

FIG. 3

| 15bits | 5bits |
|--------|-------|
| M | E |

FIG. 4

| K=3bits | W-K=3bits |
|---------|-----------|
| E*norm_di*-E*norm_min* | M*norm_di'* |

FIG. 5

| Register address | Stored value |
|---|---|
| 6'b00_0000 | 0 |
| 6'b00_0001 | 0 |
| 6'b00_0002 | 0 |
| ...... | ...... |
| 6'b01_0100 | 0 |
| 6'b01_0101 | 1 |
| ...... | ...... |
| 6'b11_1110 | 0 |
| 6'b11_1111 | 0 |

FIG. 6

**100**

| 110 | 120 | 130 |
|---|---|---|

FIG. 7

**200**

→ Range and velocity of the target object

FIG. 8

FIG. 9a

FIG. 9b

FIG. 9c

FIG. 9d

FIG. 9e

FIG. 9f

FIG. 9g

## INTERNATIONAL SEARCH REPORT

International application No.

**PCT/CN2023/077483**

### A. CLASSIFICATION OF SUBJECT MATTER

G06T5/40(2006.01)i;G06F17/18(2006.01)i;G06F15/00(2006.01)i;G06F7/38(2006.01)i

According to International Patent Classification (IPC) or to both national classification and IPC

### B. FIELDS SEARCHED

Minimum documentation searched (classification system followed by classification symbols)

IPC:G06T,G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 直方图, 硬件加速, 浮点, 指数, 尾数, 地址, 移位, 坐标, 雷达, 集成电路, 归一化, histogram, hardware accelerate, floating point, exponent, mantissa, address, shift, coordinate, radar, integrated circuit, normalize

### C. DOCUMENTS CONSIDERED TO BE RELEVANT

| Category* | Citation of document, with indication, where appropriate, of the relevant passages | Relevant to claim No. |
|---|---|---|
| X | US 2005143982 A1 (AGILENT TECHNOLOGIES, INC.) 30 June 2005 (2005-06-30) claims 12-20 | 1, 6-21 |
| A | CN 110297233 A (LINGBAYI ELECTRONIC GROUP CO., LTD.) 01 October 2019 (2019-10-01) entire document | 1-21 |
| A | CN 112988110 A (SANECHIPS TECHNOLOGY CO., LTD.) 18 June 2021 (2021-06-18) entire document | 1-21 |
| A | CN 113934459 A (MOBILEYE VISION TECHNOLOGIES LTD.) 14 January 2022 (2022-01-14) entire document | 1-21 |
| A | CN 215450218 U (SHENZHEN ADAPS PHOTONICS TECHNOLOGY CO., LTD.) 07 January 2022 (2022-01-07) entire document | 1-21 |
| A | US 2020110580 A1 (CA, INC.) 09 April 2020 (2020-04-09) entire document | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2023** | **16 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077483**

| Patent document cited in search report | | | Publication date (day/month/year) | Patent family member(s) | | | Publication date (day/month/year) |
|---|---|---|---|---|---|---|---|
| US | 2005143982 | A1 | 30 June 2005 | None | | | |
| CN | 110297233 | A | 01 October 2019 | None | | | |
| CN | 112988110 | A | 18 June 2021 | WO | 2021120851 | A1 | 24 June 2021 |
| CN | 113934459 | A | 14 January 2022 | US | 2017103022 | A1 | 13 April 2017 |
| | | | | US | 2022276964 | A1 | 01 September 2022 |
| | | | | WO | 2016199151 | A2 | 15 December 2016 |
| | | | | US | 2019065385 | A1 | 28 February 2019 |
| | | | | WO | 2016199154 | A1 | 15 December 2016 |
| | | | | EP | 3308260 | A1 | 18 April 2018 |
| | | | | US | 2016364835 | A1 | 15 December 2016 |
| CN | 215450218 | U | 07 January 2022 | None | | | |
| US | 2020110580 | A1 | 09 April 2020 | None | | | |

Form PCT/ISA/210 (patent family annex) (July 2022)

**REFERENCES CITED IN THE DESCRIPTION**

**Patent documents cited in the description**

- CN 202210730547
- CN 202211201288X